Europäisches Patentamt

European Patent Office

Office européen des brevets

(19)

(11) Veröffentlichungsnummer : **0 081 667**
**B1**

(12) EUROPÄISCHE PATENTSCHRIFT

(45) Veröffentlichungstag der Patentschrift :
12.11.86

(21) Anmeldenummer : 82110149.0

(22) Anmeldetag : 04.11.82

(51) Int. Cl.⁴ : **F 16 L 59/16**

(54) Kompensatorfrei verlegbare Fernwärmeleitung.

(30) Priorität : **12.12.81 DE 3149365**

(43) Veröffentlichungstag der Anmeldung :
**22.06.83 Patentblatt 83/25**

(45) Bekanntmachung des Hinweises auf die Patenterteilung : **12.11.86 Patentblatt 86/46**

(84) Benannte Vertragsstaaten :
**AT BE CH DE FR GB IT LI LU NL SE**

(56) Entgegenhaltungen :
**DE-A- 2 050 035**
**DE-A- 2 707 799**
**GB-A- 1 222 246**
**US-A- 2 592 574**
**US-A- 2 696 835**
**Zeitschrift Energie, 34. Jahrgang, Nr. 4, April 1982,**
**Zeilen 110 - 112**
**Oberbayerisches Volksblatt Rosenheim vom**
**08.01.1985**

(73) Patentinhaber : **Fritz Hirsch Rohrleitungsbau GmbH**
**Frühlingstrasse 36**
**D-4300 Essen-Bredeney (DE)**

(72) Erfinder : **Kastaun, Horst**
**Saarstrasse 46**
**D-4020 Mettmann (DE)**

(74) Vertreter : **von Rohr, Hans Wilhelm, Dipl.-Phys. et al**
**Patentanwälte Gesthuysen & von Rohr Huyssenallee**
**15 Postfach 10 13 33**
**D-4300 Essen 1 (DE)**

EP 0 081 667 B1

## Beschreibung

Die Erfindung betrifft eine kompensatorfrei verlegbare Fernwärmeleitung, bestehend aus einem metallischen inneren Mediumrohr für das Fernwärmemedium, einem das Mediumrohr koaxial umgebenden, metallischen äußeren Mantelrohr, einer Vielzahl von zwischen dem Mediumrohr und dem Mantelrohr wirksamen, radialen Abstandhaltern und einer Mehrzahl von in Längsrichtung in erheblichem Abstand voneinander angeordneten, das Mediumrohr und das Mantelrohr mechanisch ortsfest miteinander verbindenden Widerlagerringen, wobei das Mediumrohr und das Mantelrohr durch Verschweißen einzelner Mediumrohrabschnitte und Mantelrohrabschnitte miteinander und ggf. mit entsprechenden Widerlagerringen herstellbar sind, wobei, nach dem Verschweißen eines Mediumrohrabschnittes und eines Mantelrohrabschnittes mit einem Widerlagerring an einem Ende, der Mediumrohrabschnitt durch Erwärmung elastisch dehnbar ist und wobei der Mediumrohrabschnitt in gedehntem Zustand am anderen Ende mit dem nächsten Widerlagerring und der Widerlagerring mit dem entsprechenden Mantelrohrabschnitt verschweißbar ist.

Grundsätzlich gibt es verschiedene Arten von Fernwärmeleitungen, nämlich solche mit nur einem Metallrohr, solche mit einem Metallrohr mit einem dieses umgebenden, kraftschlüssig mit diesem verbundenen Isoliermantel aus Kunststoff und andere mit zwei koaxial verlegten Metallrohren, nämlich einem Mediumrohr und einem Mantelrohr. Die vorliegende Erfindung betrifft die letztgenannten Fernwärmeleitungen, bei denen also sowohl das innere Mediumrohr als auch das äußere Mantelrohr aus Metall, vorzugsweise aus Stahl bestehen. Bei diesen Fernwärmeleitungen ist zwischen dem Mediumrohr und dem Mantelrohr einerseits eine das Mediumrohr unmittelbar umgebende Hülle aus Isoliermaterial, andererseits zwischen der Hülle aus Isoliermaterial und der Innenwandung des Mantelrohres ein evakuierbarer Zwischenraum vorgesehen. Dies führt einerseits dazu, daß in dem Mediumrohr ein auf relativ hoher Temperatur befindliches Fernwärmemedium über weite Strecken gut isoliert geführt werden kann, erlaubt andererseits über das Vakuumsystem eine schnelle und sichere Feststellung von eventuellen Lecks od. dgl.

Zuvor ist ausgeführt worden, daß bei Fernwärmeleitungen der hier in Rede stehenden Art betriebsmäßig ein auf relativ hoher Temperatur befindliches Fernwärmemedium durch das Mediumrohr geführt wird. Das hat zur Folge, daß das metallische Mediumrohr sich im Betrieb gegenüber dem Verlegezustand nicht unerheblich ausdehnt, also im wesentlichen verlängert. Bei dem thermisch isolierten Mantelrohr geschieht dies nicht oder praktisch nicht, so daß Vorsorge dafür getroffen werden muß, daß betriebsmäßig keine zu hohen Spannungen zwischen dem Mediumrohr und dem Mantelrohr auftreten.

Um die betriebsmäßig auftretende Längenänderung des Mediumrohres aufzufangen, ist es seit langem bekannt, an den Widerlagerringen oder zwischen jeweils zwei Widerlagerringen, an denen ja Mediumrohr und Mantelrohr ortsfest miteinander verbunden sind, sogenannte Kompensatoren oder Kompensationsabschnitte vorzusehen. Diese Kompensatoren sind herstellungs- und montagetechnisch relativ aufwendig und damit aus wirtschaftlichen Gründen unerwünscht. Deswegen ist auch alsbald ein Verfahren zum Verlegen solcher Fernwärmeleitungen ohne Kompensator entwickelt worden (vgl. die DE-C-1 258 215). Bei diesem Verfahren wird das Mediumrohr abschnittweise, also zwischen jeweils zwei Widerlagerringen, mechanisch gedehnt, und zwar um einem Betrag, der etwa der Hälfte der betriebsmäßig maximal zu erwartenden Längenänderung entspricht. In diesem gedehnten Zustand wird dann das Mediumrohr über den entsprechenden Widerlagerring mit dem Mantelrohr verschweißt. Das Mantelrohr wird dadurch geringfügig elastisch gestaucht. Insgesamt besteht dann im Verlegezustand eine Vorspannung zwischen Mediumrohr und Mantelrohr in « negativer » Richtung, bei einer mittleren Temperatur wird Spannungsfreiheit zwischen Mediumrohr und Mantelrohr erreicht und bei der maximal zu erwartenden Temperatur des Fernwärmemediums liegt eine der ursprünglichen « negativen » Vorspannung entsprechende « positive » Spannung zwischen Mediumrohr und Mantelrohr vor. Es hat sich gezeigt, daß die Spannungen der hier auftretenden Größe über die Elastizität des bei dem Mediumrohr und dem Mantelrohr verwendeten Materials aufgefangen werden können.

Das bekannte Verfahren zum kompensatorfreien Verlegen von Fernwärmeleitungen macht in erster Linie von einer mechanischen Dehnung des Mediumrohres Gebrauch. Im gleichen Zusammenhang ist aber auch eine thermische Dehnung des Mediumrohres vorgeschlagen worden, und zwar mit durch das Mediumrohr beim Verlegen geleitetem Heißwasser. In der Praxis hat sich aber gezeigt, daß dies Verfahren sehr umständlich und teuer und damit nicht wirtschaftlich ist.

Im übrigen ist eine kompensatorfrei verlegbare Fernwärmeleitung anderer Gattung, nämlich mit einem Metallrohr mit einem dieses umgebenden, kraftschlüssig mit diesem verbundenen Isoliermantel aus Kunststoff, bekannt, die insgesamt dadurch erwärmt und gedehnt wird, daß durch das Metallrohr ein elektrischer Strom geleitet wird. Wegen der Elastizität des Isoliermantels aus Kunststoff folgt dieser der durch die Erwärmung verursachten Dehnung des Metallrohrs. Das Widerlager für das so auf Spannungsfreiheit bei der gewünschten mittleren Temperatur gedehnte Metallrohr bildet das umgebende Erdreich, das nach Verfüllen des Grabens zur Aufnahme der Fernwärmeleitung den Isoliermantel durch Reibung festhält. Diese durch offenkundige Vorbenutzung in der Praxis bekanntgewordene Fernwärmeleitung wird als Doppelstrang mit parallelem Vorlauf und Rücklauf in ein und demselben Graben verlegt, so daß der hier zur Erwärmung des Metallrohrs dienende elektrische Strom in entgegengesetzten Richtungen durch die Vorlaufleitung und die Rücklaufleitung geleitet werden kann. Dadurch können die Anschlüsse für die Stromquelle an einem Ende der beiden parallel liegenden Leitungen angeordnet sein, während die entgegengesetzten Enden der beiden Leitungen lediglich elektrisch verbunden sein müssen.

Der Erfindung liegt nun die Aufgabe zugrunde die eingangs erläuterte kompensatorfreie Fernwärmeleitung mit einem metallischen inneren Mediumrohr für das Fernwärmemedium und einem das Mediumrohr koaxial umgebenden, metallischen äußeren Mantelrohr so auszugestalten und weiterzubilden, daß auch diese Fernwärmeleitung einfach und schnell verlegbar ist.

Die erfindungsgemäße Fernwärmeleitung, bei der die zuvor aufgezeigte Aufgabe gelöst ist, ist dadurch gekennzeichnet, daß über die entsprechend gestalteten Widerlagerringe das Mediumrohr und das Mantelrohr thermisch und elektrisch voneinander isoliert sind, so daß zur Erwärmung durch den jeweiligen Mediumrohrabschnitt ein elektrischer Strom leitbar ist. Wesentlich ist, daß die thermische Dehnung allein des Mediumrohrs bzw. des jeweiligen Mediumrohrabschnittes auch unter den besonderen Voraussetzungen einer gattungsgemäßen Fernwärmeleitung mit Hilfe von ekektrischem Strom erzielt werden kann. Dies wird dadurch möglich, daß erfindungsgemäß die Widerlagerringe so gestaltet sind, daß sie zwar für die mechanisch ortsfeste Verbindung des Mediumrohrs und des Mantelrohrs sorgen, gleichwohl aber das Mediumrohr und das Mantelrohr sowohl thermisch als auch, insbesondere, elektrisch voneinander isolieren. Diese erfindungsgemäße Gestaltung der gattungsgemäßen Fernwärmeleitung erlaubt nun die Anwendung der bei einer Fernwärmeleitung anderer Gattung, nämlich einer Fernwärmeleitung ohne ein metallisches äußeres Mantelrohr, bekannten Verlegetechnik.

Zuvor ist grundsätzlich angesprochen worden, daß die Widerlagerringe der erfindungsgemäßen Fernwärmeleitung so gestaltet sind, daß das Mediumrohr und das Mantelrohr thermisch und elektrisch voneinander isoliert sind. Mit dieser grundsätzlichen Anregung lassen sich unterschiedliche Konstruktionen von Widerlagerringen denken. Besonders vorteilhaft und gleichzeitig überraschend einfach läßt sich die mechanisch ortsfeste Verbindung des Mediumrohrs und des Mantelrohrs einerseits und die thermische und elektrische Isolation andererseits dadurch realisieren, daß jeder Widerlagerring aus zwei inneren Halteringen, einem axial gesehen zwischen den inneren Halteringen angeordneten, äußeren Haltering und mindestens zwei elektrisch und thermisch isolierenden Druckaufnahmeelementen besteht, daß die inneren Halteringe mit dem Mediumrohr und der äußere Haltering mit dem Mantelrohr verschweißt sind und daß die Druckaufnahmeelemente zwischen den beiden inneren Halteringen und dem äußeren Haltering in axialer Richtung zur Druckaufnahme wirksam sind. Dabei berühren die inneren Halteringe die Innenseiten des Mantelrohres nicht und berührt der äußere Haltering die Außenseite des Mediumrohrs nicht. Der Außendurchmesser des äußeren Halteringes entspricht im übrigen zweckmäßigerweise etwa dem Außendurchmesser des Mantelrohres, so daß die Schweißnähte zwischen den Mantelrohrabschnitten und dem äußeren Haltering des entsprechenden Widerlagerringes auf der Außenseite liegen.

Nach einer weiteren Lehre der Erfindung, der besondere Bedeutung zukommt, weist im Bereich jedes Widerlagerringes das Mediumrohr einen Stromanschlußkörper und das Mantelrohr eine Zugangsöffnung für den Stromanschlußkörper auf. Diese Ausgestaltung trägt der Tatsache Rechnung, daß der Stromanschluß des Mediumrohrs mitunter, sogar relativ häufig, bei schon verschweißtem, also geschlossenem Mantelrohr erfolgen muß. Dazu dient die Zugangsöffnung in dem Mantelrohr, die nach erfolgter Dehnung des Mediumrohrs in dem entsprechenden Abschnitt und nach Abklemmen der Stromquelle verschlossen, beispielsweise zugeschweißt werden kann.

Der Stromanschlußkörper kann durch die Zugangsöffnung dadurch zugänglich sein, daß beispielsweise ein Kabel mit Kabelschuh durch die Zugangsöffnung hindurch auf den Stromanschlußkörper aufgesteckt wird. Das ist relativ kompliziert, so daß es zweckmäßiger ist, wenn der Stromanschlußkörper durch die Zugangsöffnung gegenüber dem Mantelrohr elektrisch isoliert herausgeführt ist. In diesem Fall kann der Anschluß eines Kabels an den Stromanschlußkörper außerhalb des Mantelrohres einfach erfolgen. Der Stromanschlußkörper kann dann, wenn er nicht mehr gebraucht wird, abgebrannt, abgeschliffen oder anderweitig von dem Mediumrohr getrennt werden, so daß die Zugangsöffnung des Mantelrohres verschlossen werden kann.

Mitunter sind zur Befestigung eines Widerlagerringes an dem Mediumrohr bzw. der entsprechenden Halteringe an dem Mediumrohr auf dem Umfang des Mediumrohres verteilt angeordnete Verstärkungsrippen vorgesehen. Sind derartige Verstärkungsrippen vorgesehen, so empfiehlt es sich, als Stromanschlußkörper eine Verstärkungsrippe vorzusehen. Dies kann dann konkret so aussehen, daß die Verstärkungsrippe eine Anschlußverlängerung aufweist und daß die Anschlußverlängerung nach Abschluß des Verlegevorganges, also nach Abklemmen der Stromquelle, entfernbar ist.

Anders als bei den gattungsmäßig abweichenden Fernwärmeleitungen mit einem Metallrohr und einem mit diesem verbundenen Isoliermantel kann bei der erfindungsgemäßen Fernwärmeleitung der jeweils zu erwärmende Mediumrohrabschnitt nicht wirklich optimal gegen Berührung geschützt werden. Deswegen ist zweckmäßig und sicherheitstechnisch mitunter sogar erforderlich, daß zur Erwärmung der Mediumrohrabschnitte eine Stromquelle mit einer Nenngleichspannung von maximal 50 V, vorzugsweise zwischen 10 V und 24 V, vorgesehen ist. Das sind Spannungen, die für die beteiligten Personen keine Gefahr bedeuten.

Im folgenden wird die Erfindung anhand einer lediglich Ausführungsbeispiele darstellenden Zeichnung näher erläutert ; es zeigt

Figur 1 in schematischer Darstellung und im Schnitt eine Fernwärmeleitung mit Mediumrohr und Mantelrohr in verschiedenen Verfahrensstadien der Verlegung,

Figur 2 in schematischer Darstellung und im Schnitt einen Leitungsabschnitt einer doppelten Fernwärmeleitung (Vorlauf/Rücklauf) vor und nach der Erwärmung der Mediumrohrabschnitte,

Figur 3 in vergrößerter Darstellung den Bereich eines Widerlagerringes bei einer Fernwärmeleitung nach Fig. 1,

Figur 4 einen Schnitt durch den Gegenstand nach Fig. 3 entlang der Linie IV-IV und

Figur 5 zwei Verfahrensstadien bei der Verlegung einer Fernwärmeleitung gemäß Fig. 1.

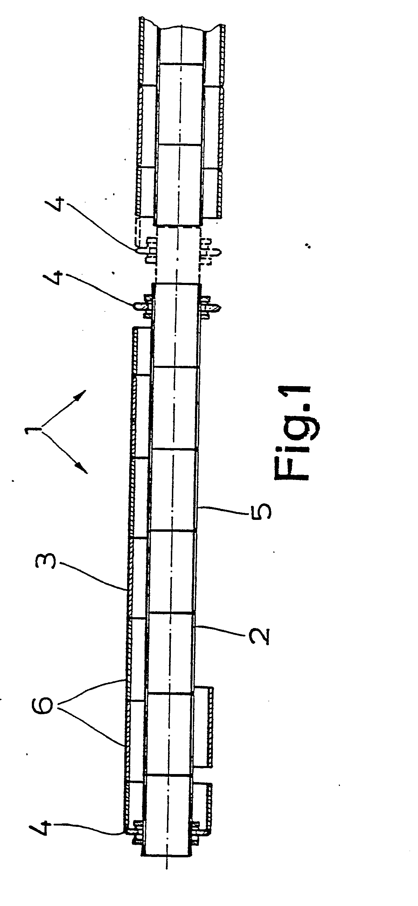

In Fig. 1 ist ein Ausführungsbeispiel einer Fernwärmeleitung 1 in verschiedenen Verfahrensstadien der Verlegung dargestellt, so daß neben der Erläuterung der Fernwärmeleitung 1 selbst auch eine Erläuterung verschiedener Verfahrensschritte des Verlegeverfahrens erfolgen kann.

Bei der in Fig. 1 dargestellten Fernwärmeleitung 1 handelt es sich um eine kompensatorfrei verlegbare Fernwärmeleitung 1, die aus einem metallischen inneren Mediumrohr 2 für das Fernwärmemedium und einem das Mediumrohr koaxial umgebenden, metallischen äußeren Mantelrohr 3 besteht. Zwischen dem Mediumrohr 2 und dem Mantelrohr 3 ist eine Vielzahl von radialen Abstandhaltern vorgesehen, die in Fig. 1 aber nicht dargestellt sind. Außerdem sind in Längsrichtung in erheblichem Abstand voneinander angeordnete, das Mediumrohr 2 und das Mantelrohr 3 ortsfest miteinander verbindende Widerlagerringe 4 vorgesehen.

Wie Fig. 1 deutlich zeigt, besteht das Mediumrohr 2 aus einer Mehrzahl von Mediumrohrabschnitten 5. Ebenso besteht das Mantelrohr 3 aus einer Mehrzahl von Mantelrohrabschnitten 6. Jeweils mehrere Mediumrohrabschnitte 5 und Mantelrohrabschnitte 6 bilden gemeinsam mit entsprechenden Widerlagerringen 4 einen Leitungsabschnitt der Fernwärmeleitung 1.

Ein Leitungsabschnitt der in Fig. 1 dargestellten Fernwärmeleitung 1 wird wie folgt verlegt :

Zunächst wird ein Mediumrohrabschnitt 5 mit einem Widerlagerring 4 verschweißt und der Widerlagerring 4 seinerseits wird mit einem entsprechenden Mantelrohrabschnitt 6 verschweißt. Dann wird an dem Mediumrohrabschnitt 5 ein weiterer Mediumrohrabschnitt 5 angeschweißt, danach an dem Mantelrohrabschnitt 6 ein weiterer Mantelrohrabschnitt 6 usw. Dies ist aus dem unteren Teil von Fig. 1 erkennbar. Auf den letzten Mediumrohrabschnitt 5 des Leitungsabschnittes der Fernwärmeleitung 1 wird wiederum ein Widerlagerring 4 aufgeschweißt, ein entsprechender Mantelrohrabschnitt 6 wird aber noch nicht aufgesetzt und verschweißt. Es erfolgt hier vielmehr zunächst eine Dehnung des Mediumrohrabschnittes 5 bzw. der für den Leitungsabschnitt der Fernwärmeleitung 1 vorgesehenen Mediumrohrabschnitte 5. Diese Dehnung ist in Fig. 1 — übertrieben — gestrichelt angedeutet. Zwischen den noch nicht verschweißten Widerlagerring 4 und den letzten Mantelrohrabschnitt 6 wird dann ein die noch offene Lücke schließender Mantelrohrabschnitt 6 eingesetzt, der, anders ist das hier technisch nicht möglich, aus zwei Halbschalen zusammengesetzt wird.

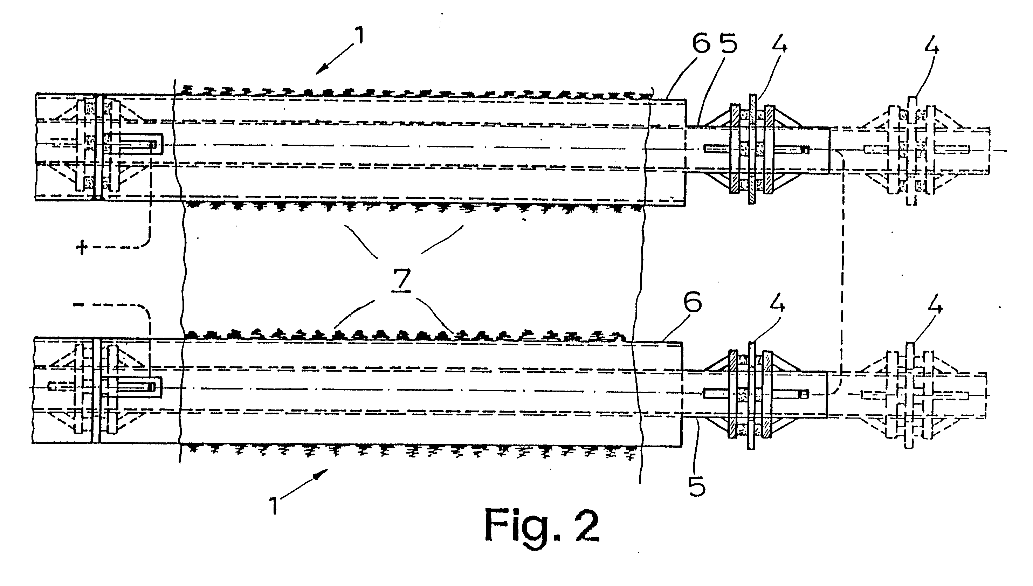

Aus Fig. 2 ergibt sich deutlich, wie die Dehnung des Mediumrohrabschnittes 5 erfolgt. Durch den Mediumrohrabschnitt 5 wird nämlich zur Erwärmung ein elektrischer Strom geleitet. Im dargestellten Ausführungsbeispiel liegen zwei Fernwärmeleitungen 1 nebeneinander in einem Graben und ein elektrischer Strom wird gleichzeitig durch nebeneinander liegende Mediumrohrabschnitte 5 beider Fernwärmeleitungen 1 geleitet. Dies ist durch die gestrichelte Linie von « + » nach « — » angedeutet.

In Fig. 2 ist — übertrieben — wiederum gestrichelt dargestellt, welche Längenänderung der Mediumrohrabschnitte 5 durch die Erwärmung mittels des elektrischen Stromes erfolgt. Aus Fig. 2 ergibt sich im übrigen weiter, daß die Mantelrohrabschnitte 6 der Fernwärmeleitungen 1 schon in einem Graben verlegt und bis auf die Bereiche unmittelbar vor und hinter den Widerlagerringen 4 mit Erdreich 7 abgedeckt sind. Die Mantelrohrabschnitte 6 bilden also als solche mehr oder weniger ortsfest angeordnete Widerlager für die Dehnungsbewegung der Mediumrohrabschnitte 5.

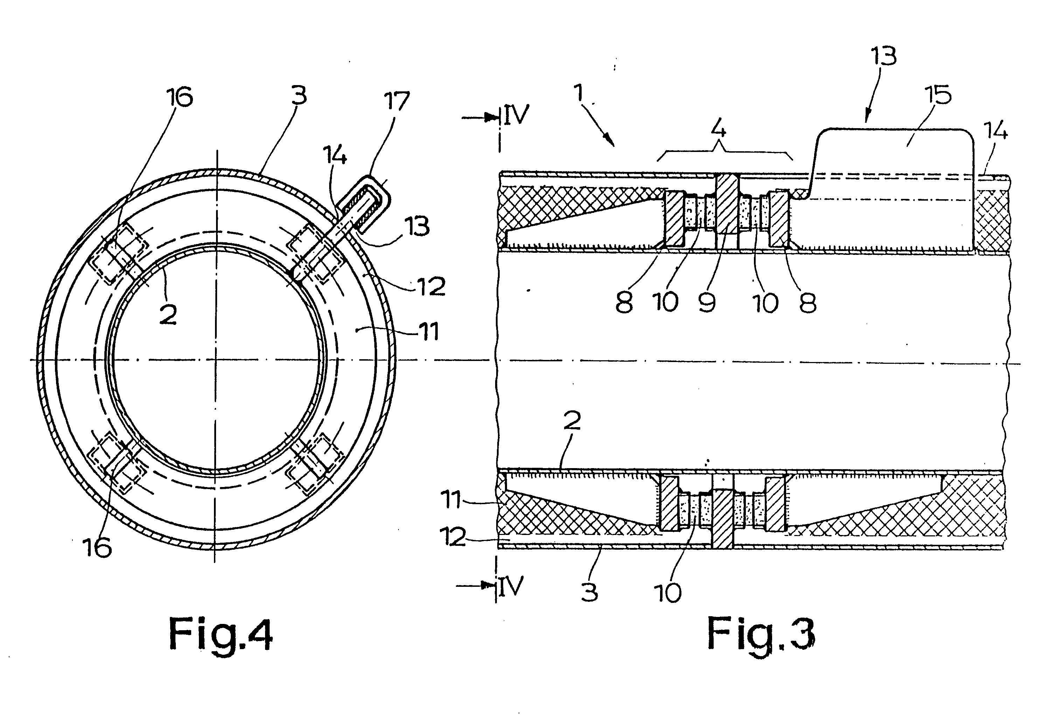

Fig. 3 zeigt genauer den Aufbau einer Fernwärmeleitung 1 im Bereich eines Widerlagerringes 4. Aus dieser Darstellung ergibt sich, daß über den Widerlagerring 4 eine mechanisch feste, jedoch thermisch und elektrisch isolierende Verbindung zwischen Mediumrohr 2 und Mantelrohr 3 gegeben ist. Dazu besteht der Widerlagerring 4 aus zwei inneren Halteringen 8, einem axial gesehen zwischen den inneren Halteringen 8 angeordneten äußeren Haltering 9 und mehreren elektrisch und thermisch isolierenden Druckaufnahmeelementen 10. Die inneren Halteringe 8 sind mit dem Mediumrohr 2 verschweißt, während der äußere Haltering 9 mit dem Mantelrohr 3 verschweißt ist. Die Druckaufnahmeelemente 10 sind zwischen den beiden inneren Halteringen 8 und dem äußeren Haltering 9 wirksam und nehmen den durch die Vorspannung des Mediumrohres 2 gegenüber dem Mantelrohr 3 erzeugten Druck unabhängig von der axialen Wirkungsrichtung auf.

Aus Fig. 3 ergibt sich im übrigen, daß das Mediumrohr 2 mit einer Hülle 11 aus Isoliermaterial versehen ist und daß zwischen der Hülle 11 aus Isoliermaterial und der Innenseite des Mantelrohres 3 ein evakuierbarer Hohlraum 12 existiert.

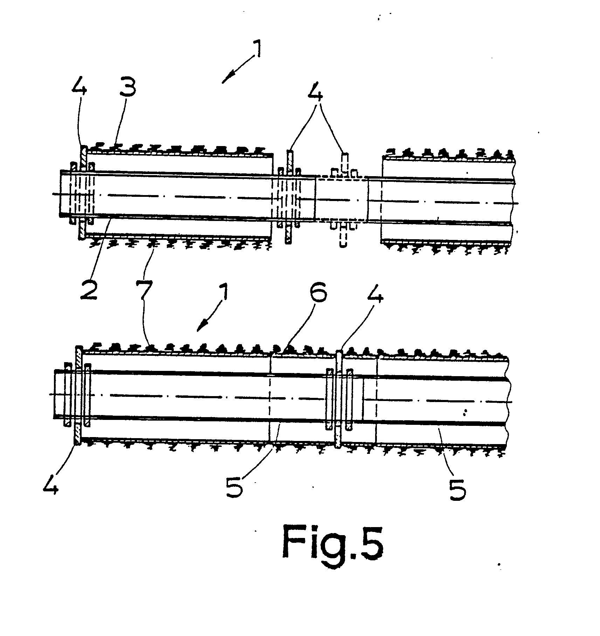

Die Fig. 3 und 4 zeigen gemeinsam sehr deutlich, daß im Bereich des Widerlagerringes 4 das Mediumrohr 2 einen Stromanschlußkörper 13 und das Mantelrohr 3 eine Zugangsöffnung 14 für den Stromanschlußkörper 13 aufweist. Der Stromanschlußkörper 13 ist durch die Zugangsöffnung 14 gegenüber dem Mantelrohr 3 elektrisch isoliert herausgeführt. Als Stromanschlußkörper 13 ist eine Verstärkungsrippe vorgesehen, wobei die Verstärkungsrippe eine Anschlußverlängerung 15 aufweist, die nach Abschluß des Verlegevorganges entfernbar ist.

Aus Fig. 4 ergibt sich, daß weitere Verstärkungsrippen 16 vorgesehen sind und daß auf die den Stromanschlußkörper 13 bildende Verstärkungsrippe im Bereich der Anschlußverlängerung 15 ein Kabelschuh 17 eines zu einer nicht dargestellten Stromquelle führenden Kabels aufsetzbar ist.

Fig. 5 zeigt schließlich nochmals zwei Verfahrensstadien bei der Verlegung einer Fernwärmeleitung 1. Im oberen Teil von Fig. 5 wird der Mediumrohrabschnitt 5 des Mediumrohres 2 vor und nach der Erwärmung dargestellt, erkennbar an der unterschiedlichen Lage des entsprechenden Widerlagerringes 4. Im unteren Teil von Fig. 5 ist dann die Fernwärmeleitung 1 in fertig verlegtem Zustand dargestellt, d. h. mit verschweißten Mediumrohrabschnitten 5 und mit zusätzlich eingesetzten Mantelrohrabschnitten 6, über die der noch offene Bereich unmittelbar vor und hinter dem Widerlagerring 4 abgedeckt ist. Auch das die Fernwärmeleitung 1 abdeckende und verdichtete Erdreich 7 ist angedeutet.

Wie sich aus Fig. 2 deutlich ergibt, ist es möglich, bei paralleler Verlegung von zwei Fernwärmeleitungen 1 die Stromquelle an einem Ende der jeweiligen Mediumrohrabschnitte 5 anzuordnen, wobei die Mediumrohrabschnitte 5 an den anderen Enden nur elektrisch miteinander verbunden werden müssen. Wegen des relativ geringen spezifischen Widerstandes der Mediumrohrabschnitte 5 haben sich, bei aus sicherheitstechnischen Gründen vorgegebenen Nennspannungen der Stromquelle zwischen 10 und 26 V, bei dieser Konstellation Längen der Leitungsabschnitte der Fernwärmeleitungen 1 von 100 bis 600 Metern als zweckmäßig erwiesen.

**Patentansprüche**

1. Kompensatorfrei verlegbare Fernwärmeleitung (1), bestehend aus einem metallischen inneren Mediumrohr (2) für das Fernwärmemedium, einem das Mediumrohr koaxial umgebenden, metallischen äußeren Mantelrohr (3), einer Vielzahl von zwischen dem Mediumrohr (2) und dem Mantelrohr (3) wirksamen, radialen Abstandhaltern und einer Mehrzahl von in Längsrichtung in erheblichem Abstand voneinander angeordneten, das Mediumrohr (2) und das Mantelrohr (3) mechanisch ortsfest miteinander verbindenden Widerlagerringen (4), wobei das Mediumrohr (2) und das Mantelrohr (3) durch Verschweißen einzelner Mediumrohrabschnitte (5) und Mantelrohrabschnitte (6) miteinander und ggf. mit entsprechenden Widerlagerringen (4) herstellbar sind, wobei, nach dem Verschweißen eines Mediumrohrabschnittes (5) und eines Mantelrohrabschnittes (6) mit einem Widerlagerring (4) an einem Ende, der Mediumrohrabschnitt (5) durch Erwärmung elastisch dehnbar ist und wobei der Mediumrohrabschnitt (5) in gedhntem Zustand am anderen Ende mit dem nächsten Widerlagerring (4) und der Widerlagerring (4) mit dem entsprechenden Mantelrohrabschnitt (6) verschweißbar ist, dadurch gekennzeichnet, daß über die entsprechend gestalteten Widerlagerringe (4) das Mediumrohr (2) und das Mantelrohr (3) thermisch und elektrisch voneinander isoliert sind, so daß zur Erwärmung durch den jeweiligen Mediumrohrabschnitt (5) ein elektrischer Strom leitbar ist.

2. Fernwärmeleitung nach Anspruch 1, dadurch gekennzeichnet, daß jeder Widerlagerring (4) aus zwei inneren Halteringen (8), einem axial gesehen zwischen den inneren Halteringen (8) angeordneten, äußeren Haltering (9) und mindestens zwei elektrisch und thermisch isolierenden Druckaufnahmeelementen (10) besteht, daß die inneren Halteringe (8) mit dem Mediumrohr (2) und der äußere Haltering (9) mit dem Mantelrohr (3) verschweißt sind und daß die Druckaufnahmeelemente (10) zwischen den beiden inneren Halteringen (8) und dem äußeren Haltering (9) in axialer Richtung zur Druckaufnahme wirksam sind.

3. Fernwärmeleitung nach Anspruch 1 oder 2, dadurch gekennzeichnet, daß im Bereich jedes Widerlagerringes (4) das Mediumrohr (2) einen Stromanschlußkörper (13) und das Mantelrohr (3) eine Zugangsöffnung (14) für den Stromanschlußkörper (13) aufweist.

4. Fernwärmeleitung nach Anspruch 3, dadurch gekennzeichnet, daß der Stromanschlußkörper (13) durch die Zugangsöffnung (14) gegenüber dem Mantelrohr (3) elektrisch isoliert herausgeführt ist.

5. Fernwärmeleitung nach Anspruch 3 oder 4, dadurch gekennzeichnet, daß als Stromanschlußkörper (13) eine Verstärkungsrippe vorgesehen ist.

6. Fernwärmeleitung nach Anspruch 5, dadurch gekennzeichnet, daß die Verstärkungsrippe eine Anschlußverlängerung (15) aufweist und daß die Anschlußverlängerung (15) nach Abschluß des Verlegevorganges entfernbar ist.

7. Fernwärmeleitung nach einem der Ansprüche 1 bis 6, dadurch gekennzeichnet, daß zur Erwärmung der Mediumrohrabschnitte (5) eine Stromquelle mit einer Nenngleichspannung von maximal 50 V, vorzugsweise zwischen 10 V und 24 V, vorgesehen ist.

## Claims

1. A compensator-free long distance heat pipeline (1) that can be buried, consisting of a metallic inner medium pipe (2) for the long-distance heated medium, a metallic outer jacketing pipe (3) that coaxially surrounds the medium pipe, a multiplicity of radial clearance spacers fitted between the medium pipe (2) and the jacketing pipe (3), and a multiplicity of abutment rings (4) located at considerable distances apart in the direction of length of the pipeline and mechanically connecting together permanently the medium pipe (2) and the jacketing pipe (3), in which the medium pipe (2) and the jacketing pipe (3) can be produced by welding together individual lengths of medium pipe (5) and jacketing pipe (6) with appropriate abutment rings (4) as required, in which after welding together at one end a length of medium pipe (5) and a length of jacketing pipe (6) with an abutment ring (4) the length of medium pipe (5) is elastically expandable by heating, and in which the length of medium pipe (5) in its expanded state is weldable at its other end to the next abutment ring (4) and the abutment ring (4) is weldable to the corresponding length of jacketing pipe (6), characterised in that the medium pipe (2) and the jacketing pipe (3) are thermally and electrically insulated from one another by the correspondingly-constructed abutment rings, so that an electric current can be passed through the respective length of medium pipe (5) for heating purposes.

2. A long distance heat pipeline according to Claim 1, characterised in that each abutment ring (4) consists of two inner holding rings (8), an outer holding ring (9) which is axially located between the inner holding rings (8), and at least two electrically and thermally insulating pressure-absorption units (10), that the inner holding rings (8) are welded to the medium pipe (2) and the outer holding ring (9) is welded to the jacketing pipe (3) and that the pressure absorption units (10) act in an axial direction between the two inner holding rings (8) and the outer holding ring (9) to absorb the pressure.

3. A long distance heat pipeline according to Claim 1 or 2, characterised in that in the neighbourhood of each abutment ring (4) the medium pipe (2) possesses a current connector (13) and the jacketing pipe (3) possesses an access opening (14) for the current connector (13).

4. A long distance heat pipeline according to Claim 3, characterised in that the current connector (13) is led out through the access opening (14) with electrical insulation from the jacketing pipe (3).

5. A long distance heat pipeline according to Claim 3 or 4, characterised in that a strengthening rib is provided as current connector (13).

6. A long distance heat pipeline according to Claim 5, characterised in that the strengthening rib possesses a connection extension (15) and that the connection extension (15) is removable at the conclusion of the pipe-laying process.

7. A long distance heat pipeline according to one of Claims 1 to 6, characterised in that for the purpose of heating the lengths of medium pipe (5) a current supply is provided with a nominal voltage of a maximum of 50 volts DC and preferably between 10 volts and 24 volts.

## Revendications

1. Conduite de chauffage à distance (1) posée sans compensateur, composée d'un tube métallique intérieur (2) pour le transport de l'agent chauffant du système de chauffage à distance, d'un tube métallique extérieur (3) disposé coaxialement autour du tube intérieur (2) et faisant office d'enveloppe, d'une pluralité d'entretoises radiales agissant entre le tube intérieur (2) et le tube extérieur (3) et d'une pluralité d'anneaux de jonction (4) mutuellement espacés, assez distants les uns des autres selon l'axe longitudinal de la conduite et servant à assurer une liaison mécanique solide sans risque de glissement mutuel entre le tube intérieur (2) et le tube extérieur (3), le tube intérieur (2) et le tube extérieur (3) étant réalisés en réunissant par soudage des tronçons séparés de tube intérieur (5) et de tube extérieur (6) entre eux et, le cas échéant, à des anneaux de jonction (4) correspondants, et cela de manière qu'après le soudage d'un tronçon de tube intérieur (5) et d'un tronçon de tube extérieur (6) à un anneau de jonction (4) à l'une des extrémités, le tronçon de tube intérieur (5) est susceptible de se dilater élastiquement sous l'effet de la chaleur, le tronçon de tube intérieur (5) pouvant, à l'état dilaté, être soudé, à l'autre extrémité, à l'anneau de jonction voisin (4), qui à son tour peut être soudé au tronçon de tube extérieur (6) correspondant, caractérisé en ce que ledit tube intérieur (2) servant au transport de l'agent chauffant et ledit tube extérieur (3) faisant office d'enveloppe sont dûment isolés l'un de l'autre aussi bien du point de vue thermique que du point de vue électrique par l'entremise desdits anneaux de jonction, judicieusement étudiés et profilés à cet effet, tout cela de manière à permettre le chauffage par un courant électrique passant par l'un ou l'autre des tronçons de tube intérieur (5).

2. Conduite de chauffage à distance selon la revendication 1, caractérisée en ce que chaque anneau de jonction (4) se compose de deux anneaux de support intérieurs (8), d'un anneau de support extérieur (9) disposé axialement entre les anneaux de support intérieurs (8), et d'au moins deux éléments d'absorption de pression (10) assurant une isolation électrique et thermique efficace, en ce que lesdits anneaux de support intérieurs (8) sont soudés au tube intérieur (2) servant au transport de l'agent chauffant et ledit anneau de support extérieur (9) est fixé au tube extérieur (3) faisant office d'enveloppe, et en ce que lesdits éléments d'absorption de pression (10) agissent axialement entre les deux anneaux de support intérieurs (8) et l'anneau de support extérieur (9), de manière à assurer une absorption efficace des contraintes provoquées par la pression.

3. Conduite de chauffage à distance selon la revendication 1 ou 2, caractérisée en ce que, au niveau de chaque anneau de jonction (4), le tube intérieur (2) est muni d'un élément de raccord électrique (13) et le tube extérieur (3) présente une ouverture d'entrée (14) pour cet élément de raccord électrique (13).

4. Conduite de chauffage à distance selon la revendication 3, caractérisée en ce que ledit élément de raccord électrique (13) passe par ladite ouverture d'entrée (14) tout en étant dûment isolé électriquement par rapport au tube extérieur (3) faisant office d'enveloppe.

5. Conduite de chauffage à distance selon la revendication 3 ou 4, caractérisée en ce que ledit élément de raccord électrique (13) se présente sous forme d'une nervure de renforcement.

6. Conduite de chauffage à distance selon la revendication 5, caractérisée en ce que ladite nervure de renforcement présente une extension de raccord (15) susceptible d'être enlevée lorsque la pose est terminée.

7. Conduite de chauffage à distance selon l'une ou l'autre des revendications précédentes 1-6, caractérisée en ce que pour le chauffage des tronçons du tube intérieur (5) est prévue une source de courant électrique d'une tension nominale de 50 V au maximum et, de préférence, située entre 10 et 24 V.

Fig.1

0 081 667

Fig. 2

0 081 667

Fig.4

Fig.3

0 081 667

Fig.5